# EUROPEAN PATENT APPLICATION

(11) **EP 4 374 753 A1**
(43) Date of publication of application: **29.05.2024**
(21) Application number: 23172563.1
(22) Date of filing: 10.05.2023
(51) Int. Cl.: A47J 42/06, A47J 42/38

(54) **GRINDER**

(30) Priority: 27.11.2022 CN 202223148034 U
(71) Applicant: Zhuhai Kelitong Electronic Co., Ltd., Zhuhai City, Guangdong (CN)
(72) Inventor: SONG, Xiaoxian, Hongqi Town, Jinwan District, Zhuhai City, Guangdong Province (CN); ZHU, Wei, Hongqi Town, Jinwan District, Zhuhai City, Guangdong Province (CN); LUO, Haifeng, Hongqi Town, Jinwan District, Zhuhai City, Guangdong Province (CN)
(74) Representative: Viering, Jentschura & Partner mbB Patent- und Rechtsanwälte

(57) **Abstract**

The present utility model discloses a grinder, comprising an upper shell, a lower shell, a PCB, a charging contact piece and a battery, wherein the lower end of said upper shell is connected to the upper end of said lower shell, said PCB is electrically connected to said battery, one end of said charging contact piece is electrically connected to said PCB, said battery and said PCB are both connected to the inside of said upper shell, and the other end of said charging contact piece protrudes from and is exposed on the side of said upper shell. In the present utility model, the charging contact piece is provided on the side of the grinder to realize side contact charging, the structures related to the charging function are provided in the upper shell, and providing the structures related to the switched-on circuit in the lower shell is avoided.

## Description

### Technical field

The present utility model generally relates to the technical field of grinding and in particular to a grinder.

### Background

For grinders currently available on the market, one contact charging mode is that a charging contact piece is provided at the lower end of the grinder, and a base with a power supply contact piece is provided, so that when the lower of the grinder is placed on the base, the charging contact piece at the lower end of the grinder contacts the power supply contact piece to charge the grinder.

The problem is that since the ground material is usually discharged from the lower end of the grinder, which means that the discharge port of the grinder is in placed on the base, and grinding powder dropping out of the discharge port is likely to result in the bad contact of the charging contact piece. In addition, setting up a circuit conduction structure for charging at the lower end of the grinder will make the lower part of the grinder complex in structure and difficult to design.

### Summary

The present utility model provides a grinder that is realized through the following technical solution:
A grinder, comprising an upper shell, a lower shell, a PCB, a charging contact piece and a battery, wherein the lower end of said upper shell is connected to the upper end of said lower shell, said PCB is electrically connected to said battery, one end of said charging contact piece is electrically connected to said PCB, said battery and said PCB are both connected to the inside of said upper shell, and the other end of said charging contact piece protrudes from and is exposed on the side of said upper shell.

Further, said upper shell comprises an inner left shell, an inner right shell and an upper bottom cap, wherein said inner left shell and said inner right shell are mounted by covering, said battery and said PCB are built in and connected to said inner left shell or said inner right shell, the other end of said charging contact piece protrudes from and is exposed on the side of said inner left shell or said inner right shell, the upper end of said upper bottom cap is connected to said inner left shell and said inner right shell, and the lower end of said upper bottom cap is connected to the upper end of said lower shell.

Further, said lower shell comprises a feed bin, a limit bulge is provided on the outer side of the upper end of said feed bin, a limit groove 1131 is provided inside the lower end of said upper bottom cap, one end of said limit groove bends down and opens, the other end of said limit groove extends circumferentially inside the lower end of the bottom cap, and said limit bulge and said limit groove are connected in a matched manner.

Further, a driving shaft and a snap spring are also provided, said lower shell also comprises a bracket, said bracket is connected to the lower end of said feed bin, said snap spring is connected to the middle of said driving shaft, said driving shaft passes through the middle fixing hole of said bracket, and said snap spring abuts against the middle fixing hole of said bracket.

Further, a male grinding head and a female grinding head are provided, said lower shell also comprises a lower bottom cap, the upper end of said lower bottom cap is connected to the lower end of said bracket, said male grinding head is connected to the lower end of said driving shaft, said female grinding head is connected inside said lower bottom cap, and said male grinding head is located inside said female grinding head.

Further, a fool-proof bulge is provided inside the lower end of said lower bottom cap.

Further, said lower shell also comprises a lower casing, and said lower casing fits over the outside of said lower bottom cap.

Further, said PCB comprises a master PCB and a charging PCB, said battery is electrically connected to said master PCB or said charging PCB, and one end of said charging contact piece is electrically connected to said charging PCB.

Further, a motor is also provided, connected inside said upper shell, and electrically connected to said PCB.

Further, said charging contact piece is a flexible charging cable.

Such design has the following advantages: The present utility model provides a grinder, wherein the charging contact piece is provided on its side to realize side contact charging, the structures related to the charging function are provided in the upper shell, and providing the structures related to the switched-on circuit in the lower shell is avoided.

### Brief description of the drawings

Fig. 1 is an overall structural diagram of the grinder and the base;
Fig. 2 is an exploded view of the driving component of the present utility model;
Fig. 3 is an exploded view of the grinding component of the present utility model;
Fig. 4 is an exploded view of the base;
Fig. 5 is a vertical sectional view of the grinder and the base;
Fig. 6 is a three-dimensional structural diagram of the upper bottom cap;
Fig. 7 is a three-dimensional structural diagram of the lower bottom cap.

Where: 1) driving component; 11) upper shell; 111) inner left shell; 112) inner right shell; 113) upper bottom cap; 1131) limit groove; 114) upper casing; 12) motor; 13) battery; 14) master PCB; 15) charging PCB; 16) charging contact piece; 2) grinding component; 21) lower shell; 211) lower casing; 212) feed bin; 2121) limit bulge; 213) lower bottom cap; 2131) fool-proof bulge; 22) bracket; 23) driving shaft; 24) snap spring; 25) male grinding head; 26) female grinding head; 3) upper base; 31) upper base upper cap; 311) lateral recess; 32) upper base lower cap; 4) lower base; 41) fixing rib; 42) fool-proof groove; 43) inner recess; 5) power supply PCB; 6) power supply contact piece; 7) external charging interface; 8) buckle position.

### Detailed description

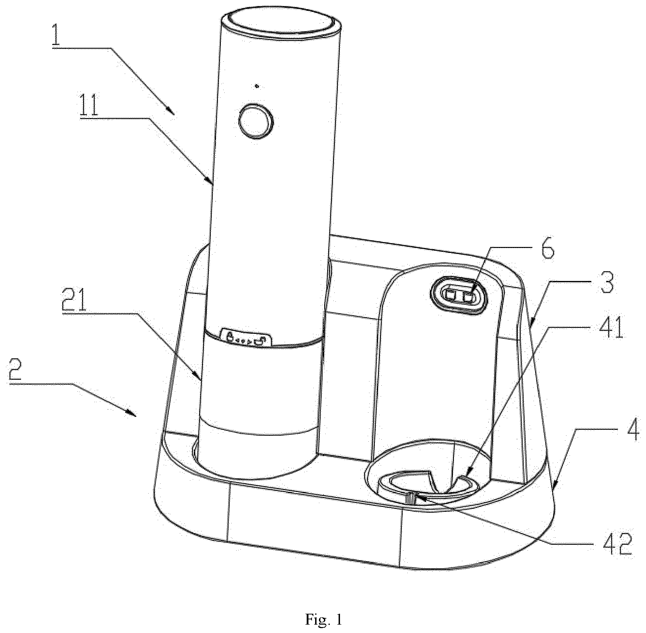

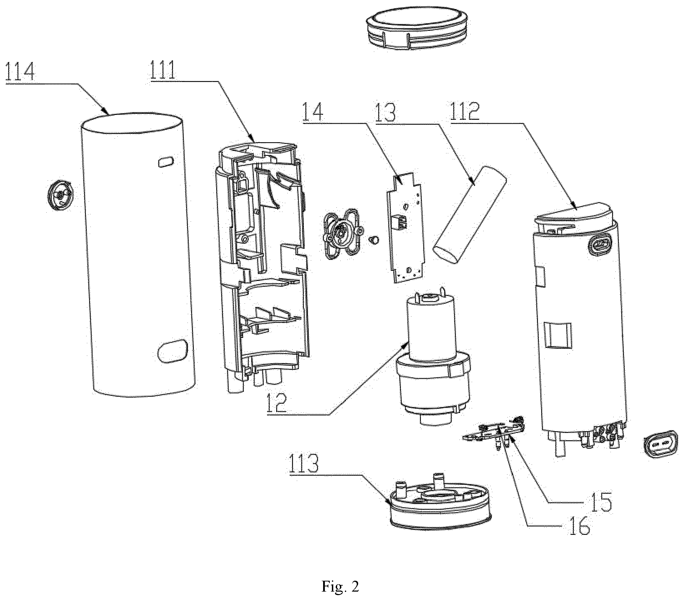

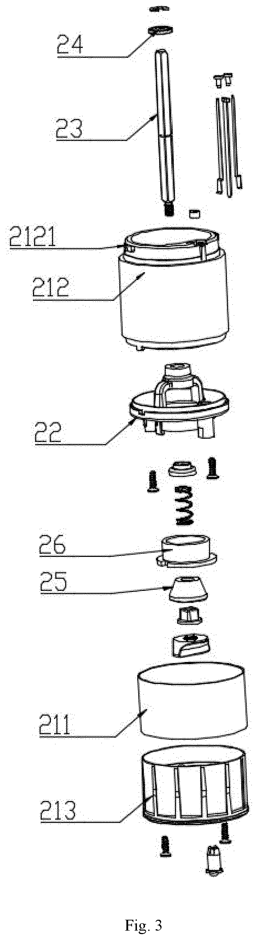

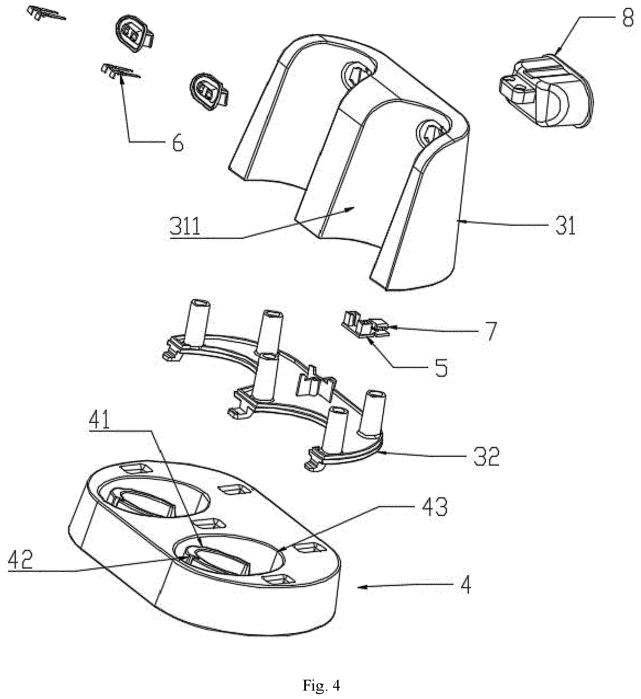

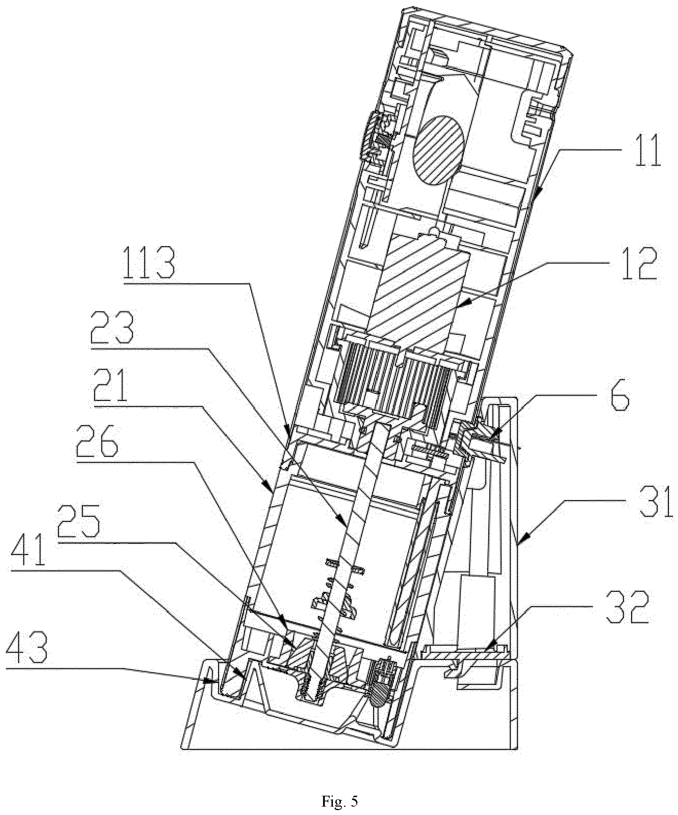

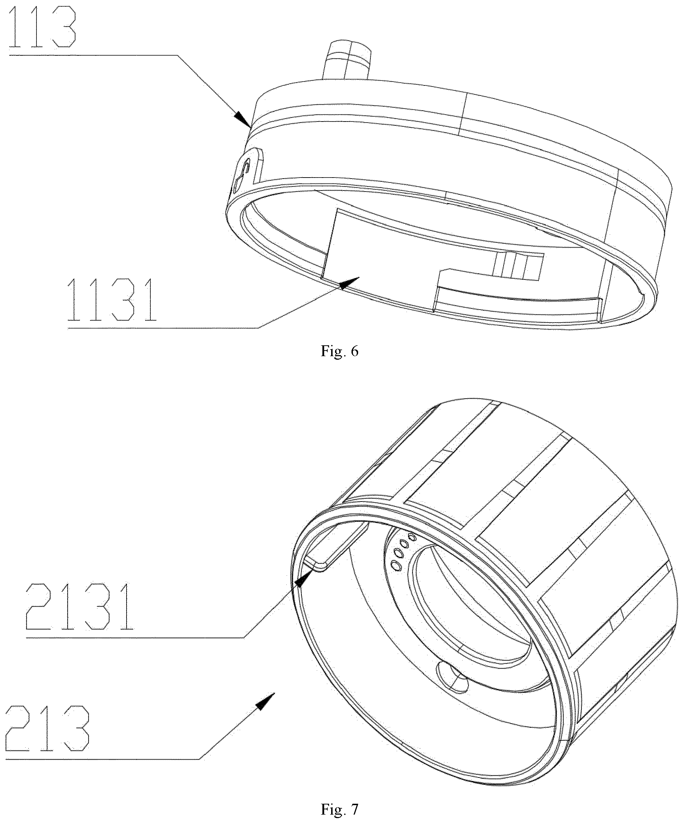

As shown in Fig. 1 to Fig. 7, the present embodiment provides a contact charging device for grinders, comprising a grinder and a base, wherein when the body of said grinder is connected to the base, said base can charge said grinder.

Said grinder comprises a driving component 1 and a grinding component 2.

Said driving component 1 comprises an upper shell 11, a motor 12, a battery 13, a master PCB 14 and a charging PCB 15, wherein said motor 12, said battery 13 and said charging PCB 15 are built in and connected inside said upper shell 11. Said master PCB 14 is electrically connected to said charging PCB 15, said master PCB 14 and said charging PCB 15 can be combined into one PCB, and said battery 13 is electrically connected to said master PCB 14 or said charging PCB 15, and used to supply power to said master PCB 14, said charging PCB 15 and said motor 12.

A charging contact piece 16 is provided on said charging PCB 15, one end of said charging contact piece 16 is electrically connected to said charging PCB 15, and the other end of said charging contact piece 16 protrudes from the side of said upper shell 11. Said charging contact piece 16 is used to contact and connect the power supply contact piece 6 on said base, and said power supply contact piece 6 can charge said battery 13 through said charging contact piece 16, said master PCB 14 and said charging PCB 15. Said charging contact piece 16 is preferably a flexible charging cable.

Said upper shell 11 comprises an inner left shell 111, an inner right shell 112, an upper bottom cap 113 and an upper casing 114. Said inner left shell 111 and said inner right shell 112 are mounted by covering, said upper bottom cap 113 is connected to the lower end of said inner left shell 111 and said inner right shell 112, and said upper casing 114 fits over the outside of said inner left shell 111 and said inner right shell 112. Said motor 12, said battery 13 and said charging PCB 15 are built in said inner left shell 111 and said inner right shell 112, said charging PCB 15 is connected to said upper bottom cap 113, the other end of said charging contact piece 16 protrudes from the hole of either said inner right shell 112 or said inner left shell 111 and the hole on said upper casing 114, said motor 12 is mounted on said inner left shell 111 and said inner right shell 112, and said master PCB and said battery 13 are connected to said inner left shell 111 or said inner right shell 112.

All circuit-related structures are contained in said upper shell 11, providing the structures related to the switched-on circuit in the lower shell 21 is avoided, and structures not related to the charging function may be provided in said lower shell 21, such as mechanical transmission structures.

Said grinding component comprises a lower shell 21, a bracket 22, a driving shaft 23, a snap spring 24, a male grinding head 25 and a female grinding head 26.

Said lower shell 21 comprises a lower casing 211, a feed bin 212 and a lower bottom cap 213, wherein a limit bulge 2121 is provided on the outer side of the upper end of said feed bin 212, a limit groove 1131 is provided inside the lower end of said upper bottom cap 113, one end of said limit groove 1131 bends down and opens, the other end of said limit groove 1131 extends circumferentially for a certain distance inside the lower end of the bottom cap, and said limit bulge 2121 can be inserted into said limit groove 1131 and moves in the direction of said limit groove 1131 to realize connection or detachment between said feed bin 212 and said bottom cap, so that the material to be ground may be added to said feed bin 212 in the detached state.

Said bracket 22 is connected to the lower end of said feed bin 212, said driving shaft 23 passes through the middle fixing hole of said bracket 22, said bracket 22 restricts the radial motion of said driving shaft 23, said snap spring 24 is clamped in the middle of said driving shaft 23, and said snap spring 24 abuts against the middle fixing hole of said bracket 22, so that said bracket 22 also restricts the axial motion of said driving shaft 23.

The upper end of said lower bottom cap 213 is connected to the lower end of said bracket 22, said female grinding head 26 is connected inside said lower bottom cap 213, said male grinding head 25 is connected to the lower end of said driving shaft 23, and the upper end of said driving shaft 23 is connected to said motor 12, so that said motor 12 can drive said male grinding head 25 to rotate through said driving shaft 23, and said male grinding head 25 is located inside said female grinding head 26. Therefore, when said male grinding head 25 rotates relative to said female grinding head 26, the material passed through is ground into particles between said male grinding head 25 and said female grinding head 26, and drops out of said lower bottom cap 213. A fool-proof bulge 2131 is provided inside the lower end of said lower bottom cap 213, and used to align the fool-proof groove 42 on the base, so that said charging contact piece 16 can be aligned with said power supply contact piece 6.

Said lower casing 211 fits over said lower bottom cap 213, and is used to decorate said lower bottom cap 213.

Said base comprises a lower base 4, an upper base 3, a power supply PCB 5, a power supply contact piece 6 and an external charging interface 7, and said upper base 3 comprises an upper base upper cap 31 and an upper base lower cap 32.

Said upper base lower cap 32 is connected to the bottom of said upper base upper cap 31, said power supply PCB 5 is built in said upper base upper cap 31 and said upper base lower cap 32, and said power supply PCB 5 is connected to said upper base lower cap 32.

A lateral recess 311 is provided in said upper base upper cap 31, and used to place the grinder.

One end of said power supply contact piece 6 is electrically connected to said power supply PCB 5, and the other end of said power supply contact piece 6 protrudes from the inside of said lateral recess 311. Said external charging interface 7 is electrically connected to said power supply PCB 5, protrudes from said upper base upper cap 31, and is used to connect the external power supply.

Said lower base 4 is detachably connected to the lower end of said upper base lower cap 32. Specifically, a plurality of fasteners are provided at the end of said upper base lower cap 32 close to said lower base 4, a plurality of catching grooves are provided on the side of said lower base 4 close to said upper base lower cap 32, and said upper base lower cap 32 and said lower base 4 are connected by a buckle, so that through said buckle connection, said upper base 3 and said lower base 4 can also be detached.

The upper surface of said lower base 4 sags downward to form an inner recess 43, and said inner recess 43 is aligned with the lower end of said lateral recess 311, and used to insert said lower bottom cap 213, so that one end of the grinder can be fixed on said inner recess 43. The bottom surface of said inner recess 43 tilts increasingly deeply downward toward said upper base upper cap 31, so that the grinder mounted on said inner recess 43 tilts toward said lateral recess 311, and the side of the grinder abuts against said lateral recess 311. An upwardly bulging fixing rib 41 is provided on the bottom surface of said inner recess 43, and used to be inserted into the inside of said lower bottom cap 213 to assist in fixing said lower bottom cap 213. A fool-proof bulge 2131 is provided on said fixing rib 41 close to said lower bottom cap 213, a fool-proof groove 42 is provided on said lower bottom cap 213, and said fool-proof bulge 2131 and said fool-proof groove 42 match each other, so that said charging contact piece 16 can be aligned with said power supply contact piece 6.

A buckle position 8 is connected to the side of said upper base upper cap 31 away from said lateral recess 311, and used to take up the base.

The charging mode of the present utility model is as follows:
The lower end of the grinder is inserted into the inner recess 43, i.e., the lower bottom cap 213 is inserted into the inner recess 43, and the fixing rib 41 is inserted into and matches the inside of the lower bottom cap 213. Since the bottom surface of the inner recess 43 tilts toward the lateral recess 311, the side of the grinder can abut against the lateral recess 311. In addition, since the fool-proof bulge 2131 and the fool-proof groove 42 match each other, the charging contact piece 16 can be aligned with and contact the power supply contact piece 6, the external charging interface 7 is communicated with the external power supply, and external power passes through the power supply PCB 5, the power supply contact piece 6, the charging contact piece 16 and charging PCB 15 successively into the battery 13 to realize contact charging.

By providing the charging contact piece 16 of the grinder on the side of the grinder and the power supply contact piece 6 on the side of the upper base upper cap 31, grinding powder can be prevented from dropping onto the charging contact piece 16 or the power supply contact piece 6 when the grinder is placed on the inner recess 43 vertically after use, thereby mitigating the bad contact between the charging contact piece 16 and the power supply contact piece 6 arising from grinding powder.

In addition, after the grinder has been used for a long time, grinding powder would drop into the inner recess 43. In this case, the buckle connection between the upper base lower cap 32 and the lower base 4 may be detached, and the lower base 4 removed and flushed directly to avoid flushing the power supply contact piece 6.

In sum, the present utility model provides a grinder, in which the charging contact piece 16 is provided on its side to realize side contact charging, the structures related to the charging function are provided in the upper shell 11, and providing the structures related to the switched-on circuit in the lower shell 21 is avoided.

The above detailed description is for a feasible embodiment of the present utility model, and this embodiment is not intended to restrict the protection scope of the present utility model. Any equivalent embodiment or change not deviating from the essence of the present utility model should be included in the protection scope of the present utility model.

## Claims

1. A grinder, comprising an upper shell (11), a lower shell (21), a PCB, a charging contact piece (16) and a battery (13), wherein the lower end of said upper shell (11) is connected to the upper end of said lower shell (21), said PCB is electrically connected to said battery (13), and one end of said charging contact piece (16) is electrically connected to said PCB, **characterized in that** said battery (13) and said PCB are both connected to the inside of said upper shell (11), and the other end of said charging contact piece (16) protrudes from and is exposed on the side of said upper shell (11).

2. The grinder according to Claim 1, **characterized in that** said upper shell (11) comprises an inner left shell (111), an inner right shell (112) and an upper bottom cap (113), wherein said inner left shell (111) and said inner right shell (112) are mounted by covering, said battery (13) and said PCB are built in and connected to said inner left shell (111) or said inner right shell (112), the other end of said charging contact piece (16) protrudes from and is exposed on the side of said inner left shell (111) or said inner right shell (112), the upper end of said upper bottom cap (113) is connected to said inner left shell (111) and said inner right shell (112), and the lower end of said upper bottom cap (113) is connected to the upper end of said lower shell (21).

3. The grinder according to Claim 2, **characterized in that** said lower shell (21) comprises a feed bin (212), a limit bulge (2121) is provided on the outer side of the upper end of said feed bin (212), a limit groove (1131) is provided inside the lower end of said upper bottom cap (113), one end of said limit groove (1131) bends down and opens, the other end of said limit groove (1131) extends circumferentially inside the lower end of the bottom cap, and said limit bulge (2121) and said limit groove (1131) are connected in a matched manner.

4. The grinder according to Claim 3, **characterized in that** a driving shaft (23) and a snap spring (24) are provided, said lower shell (21) also comprises a bracket (22), said bracket (22) is connected to the lower end of said feed bin (212), said snap spring (24) is connected to the middle of said driving shaft (23), said driving shaft (23) passes through the middle fixing hole of said bracket (22), and said snap spring (24) abuts against the middle fixing hole of said bracket (22).

5. The grinder according to Claim 4, **characterized in that** it also comprises a male grinding head (25) and a female grinding head (26), said lower shell (21) also comprises a lower bottom cap (213), the upper end of said lower bottom cap (213) is connected to the lower end of said bracket (22), said male grinding head (25) is connected to the lower end of said driving shaft (23), said female grinding head (26) is connected inside said lower bottom cap (213), and said male grinding head (25) is located inside said female grinding head (26).

6. The grinder according to Claim 5, **characterized in that** a fool-proof bulge (2131) is provided inside the lower end of said lower bottom cap (213).

7. The grinder according to Claim 5, **characterized in that** said lower shell (21) also comprises a lower casing (211), and said lower casing (211) fits over the outside of said lower bottom cap (213).

8. The grinder according to Claim 1, **characterized in that** said PCB comprises a master PCB (14) and a charging PCB (15), said battery (13) is electrically connected to said master PCB (14) or said charging PCB (15), and one end of said charging contact piece (16) is electrically connected to said charging PCB (15).

9. The grinder according to Claim 1, **characterized in that** it also comprises a motor (12), and said motor (12) is connected inside said upper shell (11) and electrically connected to said PCB.

10. The grinder according to Claim 1, **characterized in that** said charging contact piece (16) is a flexible charging cable.

## Amended claims

### Amended claims in accordance with Rule 137(2) EPC.

1. A grinder, comprising an upper shell (11), a lower shell (21), a PCB, a charging contact piece (16) and a battery (13), wherein the lower end of said upper shell (11) is connected to the upper end of said lower shell (21), said PCB is electrically connected to said battery (13), and one end of said charging contact piece (16) is electrically connected to said PCB, wherein said battery (13) and said PCB are both connected to the inside of said upper shell (11),
**characterized in that** the other end of said charging contact piece (16) protrudes from and is exposed on the side of said upper shell (11),
wherein a fool-proof bulge (2131) is provided inside the lower end of a lower bottom cap (213) of said lower shell (21), and configured to align a fool-proof groove (42) on a base for charging the grinder, so that said charging contact piece (16) can be aligned with a power supply contact piece (6) of the base.

2. The grinder according to Claim 1, **characterized in that** said upper shell (11) comprises an inner left shell (111), an inner right shell (112) and an upper bottom cap (113), wherein said inner left shell (111) and said inner right shell (112) are mounted by covering, said battery (13) and said PCB are built in and connected to said inner left shell (111) or said inner right shell (112), the other end of said charging contact piece (16) protrudes from and is exposed on the side of said inner left shell (111) or said inner right shell (112), the upper end of said upper bottom cap (113) is connected to said inner left shell (111) and said inner right shell (112), and the lower end of said upper bottom cap (113) is connected to the upper end of said lower shell (21).

3. The grinder according to Claim 2, **characterized in that** said lower shell (21) comprises a feed bin (212), a limit bulge (2121) is provided on the outer side of the upper end of said feed bin (212), a limit groove (1131) is provided inside the lower end of said upper bottom cap (113), one end of said limit groove (1131) bends down and opens, the other end of said limit groove (1131) extends circumferentially inside the lower end of the bottom cap, and said limit bulge (2121) and said limit groove (1131) are connected in a matched manner.

4. The grinder according to Claim 3, **characterized in that** a driving shaft (23) and a snap spring (24) are provided, said lower shell (21) also comprises a bracket (22), said bracket (22) is connected to the lower end of said feed bin (212), said snap spring (24) is connected to the middle of said driving shaft (23), said driving shaft (23) passes through the middle fixing hole of said bracket (22), and said snap spring (24) abuts against the middle fixing hole of said bracket (22).

5. The grinder according to Claim 4, **characterized in that** it also comprises a male grinding head (25) and a female grinding head (26), the upper end of said lower bottom cap (213) is connected to the lower end of said bracket (22), said male grinding head (25) is connected to the lower end of said driving shaft (23), said female grinding head (26) is connected inside said lower bottom cap (213), and said male grinding head (25) is located inside said female grinding head (26).

6. The grinder according to Claim 5, **characterized in that** said lower shell (21) also comprises a lower casing (211), and said lower casing (211) fits over the outside of said lower bottom cap (213).

7. The grinder according to Claim 1, **characterized in that** said PCB comprises a master PCB (14) and a charging PCB (15), said battery (13) is electrically connected to said master PCB (14) or said charging PCB (15), and one end of said charging contact piece (16) is electrically connected to said charging PCB (15).

8. The grinder according to Claim 1, **characterized in that** it also comprises a motor (12), and said motor (12) is connected inside said upper shell (11) and electrically connected to said PCB.

9. The grinder according to Claim 1, **characterized in that** said charging contact piece (16) is a flexible charging cable.
